# EUROPEAN PATENT APPLICATION

(11) **EP 1 225 754 A2**
(43) Date of publication of application: **24.07.2002**
(21) Application number: 02396005.7
(22) Date of filing: 21.01.2002
(51) Int. Cl.: H04M 3/533

(54) **Voice message system**

(30) Priority: 22.01.2001 FI 20010131
(71) Applicant: Sonera Oyj, 00510 Helsinki (FI)
(72) Inventor: Meloni, Ville, 00300 Helsinki (FI)
(74) Representative: Simmelvuo, Markku

(57) **Abstract**

The present invention relates to a voice message system which comprises a dictating terminal device (110) for dictating a voice message, a guide system (111) for guiding the user dictating the voice message, and a first telecommunication network (112) for establishing a connection between the dictating terminal device and the guide system. Further, the system comprises a voice message server (120) for adding, modifying or deleting a voice message received from the guide system, a voice message database (121) for saving the voice message received by the aforementioned voice message server, a telecommunication server (131) for generating a display user interface (140), which display user interface is used to display the voice messages saved to the voice message database as display figures (1401), a browser terminal device (130) for browsing the aforementioned saved voice messages, for listening to them and for responding to them utilizing the display user interface, and a second telecommunication network (132) for establishing a connection between the telecommunication server and the browser terminal device.

## Description

### FIELD OF THE INVENTION

The invention relates to telecommunication. In particular, the invention relates to a new and advanced voice message system in which the user browses, listens to or responds to the voice messages left by others.

### BACKGROUND OF THE INVENTION

Previously known are different systems by means of which it is possible to save voice messages left by telephone, listen to these saved messages and if desired to respond to them.

The problem with the prior-art solutions is that their user interfaces, by means of which one browses, listens to and/or replies to the messages saved by other users, are cumbersome and non-intuitive in use being typically implemented as some variation of a traditional service number.

In the following section, the prior art utilized by the invention will be briefly described.

The use of the wireless application protocol (WAP, Wireless Application Protocol) is becoming common in solutions in which a connection is needed between portable terminal devices such as mobile stations and Internet applications, e.g. electronic mail, WWW (World Wide Web), newsgroups. The wireless application protocol provides an architecture which adapts mobile phones, browser programs of mobile phones, and the WWW to work as a functional entity. When transmitting information to mobile stations the HTML language (Hyper Text Mark-up Language) used in the WWW is translated into a WML (Wireless Mark-up Language) designed for the wireless environment. At present, as the description language of the WAP standard, the WML language is used, but the language may be understood to mean also any other description language consistent with the future WAP standard. The wireless application protocol comprises of the following five layers: wireless application environment (WAE, Wireless Application Environment), wireless session layer (WSL, Wireless Session Layer), wireless transaction layer (WTP, Wireless Transaction Layer), wireless transport layer security (WTLS, Wireless Transport Layer Security), and wireless datagram layer (WDP, Wireless Datagram Layer). The wireless application environment is used to mean e.g. a WTA (WTA, Wireless Telephone Application), or some other suitable environment. Lowermost is yet a system-dependant layer which defines the transfer mode of the information inside the system in question. The specification currently accepted is the WAP specification 1.2. The aforementioned specification and other WAP-related specifications are available at the Internet address www.wapforum.com.

An IVR system (Interactive Voice Response) is used to mean a data-entry system implemented in a switched telephone network in which the user calls a predetermined service number, after which the alternatives available for choice are listed from a recording tape, and the user selects the desired alternative by pressing a button corresponding to the selected alternative on his/her terminal device equipped with dual-tone multifrequency dialing, such as e.g. a mobile station. The IVR is also called an Interactive Voice Response (APJ).

Short messages (Short Message Service, SMS) are text messages used in the GSM mobile system.

### OBJECTIVE OF THE INVENTION

The objective of the present invention is to disclose a new type of system which eliminates the disadvantages referred to above or at least significantly alleviates them. One specific objective of the invention is to disclose a system which enables one to browse the voice messages left, to listen to them and to respond to them by means of an intuitive graphic user interface.

### BRIEF DESCRIPTION OF THE INVENTION

In the present invention, the user leaves voice messages and browses, listens to and responds to the voice messages left by other users. The voice message system in accordance with the invention comprises one or more dictating terminal devices for dictating the voice message, a guide system for guiding the user dictating the voice message and for forwarding the dictated voice message further on, as well as a first telecommunication network for establishing a connection between the dictating terminal device and the guide system.

Further, according to the invention, the voice message system comprises a voice message server for adding, modifying and deleting a voice message received from the aforementioned guide system, which voice message server is connected to the aforementioned guide system. Furthermore, the voice message system in accordance with the invention comprises a voice message database for saving the voice message received by the aforementioned voice message server. The voice message database in question is arranged in conjunction with the aforementioned voice message server.

Furthermore, the voice message system in accordance with the invention comprises a telecommunication server for generating a display user interface, which display user interface is used to display the voice messages saved to the aforementioned voice message database in such a way that to each voice message corresponds a voice message-specific display figure, the visual features of which are adjusted based on predefined voice message-specific display parameters. The telecommunication server in question is connected to the aforementioned voice message server. The display figure comprises graphic figures. Alternatively and/or in addition, the display figure comprises letter and/or numeric symbols.

Furthermore, the voice message system in accordance with the invention comprises one or more browser terminal devices for browsing the aforementioned saved voice messages, for listening to them and for responding to them using the aforementioned display user interface. Furthermore, the voice message system in accordance with the invention comprises a second telecommunication network for establishing a connection between the aforementioned telecommunication server and the browser terminal device. The voice message server, voice message database and the telecommunication server are implemented either as units physically separate, or they are implemented by physically integrating them into one unit. The user responds to a voice message left by another user e.g. by leaving a voice message of his or her own into the system in response to the aforementioned voice message that was left. Alternatively, the user responds to a voice message left by another user by establishing a connection to the person that left the message via the system. In that case, having listened to the message using his/her browser terminal device, the user selects a private call using the display user interface and gives his/her own telephone number to the system. The call request is transmitted to the voice message server, which e.g. by means of the IVR system serving as the guide system establishes a call between the user that left the message and the user that requested the call. If desired, the call may be arranged as anonymous, in which case the parties of the call do not find out one another's telephone numbers.

In one embodiment of the invention, the guide system comprises a message parameter saving unit for automatically saving the predefined message parameters associated with the received voice message to the voice message-specific voice message parameter file. The message parameters are parameters associated with the voice message by means of which the voice message in question and its sender are identified by the system, such as e.g. the telephone number of the user that left the voice message, user identifier or the like, e.g. in order that the aforementioned user that left the voice message could be sent the response of another user, if necessary.

In one embodiment of the invention, the guide system further comprises a file transferring unit for transferring the received voice message with its message parameter files to the voice message server. For the transfer, e.g. a FTP protocol is used (File Transfer Protocol, FTP).

In one embodiment of the invention, the aforementioned display parameters comprise a set of voice message-specific automatic display parameters, the value of each of which is determined automatically by the system. Parameters of this kind include e.g. the time of leaving the message. In case the figures corresponding to the voice messages are displayed e.g. on a screen whose X axis corresponds to time, the system groups the display figures corresponding to the messages based on the time of leaving the message with regard to x axis.

In one embodiment of the invention, the aforementioned display parameters further comprise a set of voice message-specific interactive display parameters, the value of each of which is determined by the user, e.g. in conjunction with the dictating of the voice message corresponding to the display figure in question. These include e.g. the tone of the message. In other words, in conjunction with the dictating of the voice message the user determines, by means of a predetermined tone frequency code installed e.g. on his/her phone, whether his/her message reflects e.g. neutral or excited emotions. Based on this definition made by the user, the system determines the outward appearance of the display figure corresponding to the message in the display user interface, such as e.g. colour or shape. Alternatively, the interactive display parameters are determined in conjunction with the dictating of the voice message by some other known means than by tone frequency code, e.g. by means of short messages or WWW user interface.

In one embodiment of the invention, the system further comprises karaoke means for playing the background music of the piece of music selected by the user for the user in order to record the song part performed by the user in response to the background music in question, as well as for combining the background music part and the song part into a voice message. The karaoke means in question are arranged in conjunction with the aforementioned voice message server.

In one embodiment of the invention, the aforementioned second telecommunication network is a packet-switched telecommunication network, such as e.g. the Internet or other corresponding packet-switched telecommunication network utilizing the IP protocol (Internet Protocol, IP), the aforementioned telecommunication server is a WWW server, and the aforementioned browser terminal device is a computer terminal device equipped with a WWW browser.

In one embodiment of the invention, the aforementioned second telecommunication network is a digital mobile network, the aforementioned telecommunication server is a WAP server, and the aforementioned browser terminal device is a digital mobile station terminal device equipped with a WAP browser. The WAP server is implemented either as a server which is equipped with the WAP functionality as such, or as a combination of a WWW server and a WAP gateway, in which case the WAP gateway performs the necessary protocol conversions.

In one embodiment of the invention, the aforementioned first telecommunication network is a fixed telephone network such as e.g. an ISDN network (Integrated Services Digital Network, ISDN), the aforementioned dictating terminal device is a telephone terminal device of the aforementioned fixed telephone network, and the aforementioned guide system is an IVR system.

In one embodiment of the invention, the aforementioned first telecommunication network is a digital mobile network, such as e.g. a GSM network or the like, the aforementioned dictating terminal device is a digital mobile station terminal device, and the aforementioned guide system is an IVR system.

In one embodiment of the invention, the system further comprises a short message service centre for transmitting short messages between the aforementioned dictating terminal device and the voice message server, which short message service centre is connected to the aforementioned switched telephone network and to the voice message server. Short messages being transmitted between the dictating terminal device and the voice message server include e.g. interactive display parameters being transmitted by short messages. Further, in one embodiment of the invention, short messages are utilized in sending the desired voice message to the subscriber number selected by the user. In that case, the user sends a short message to the voice message server via the short message service centre, which short message includes the code corresponding to the voice message saved to the voice message database as well as the telephone number of the recipient. The voice message server transmits the voice message in question to the recipient e.g. by means of the IVR system.

In one embodiment of the invention, the aforementioned first telecommunication network is a packet-switched telecommunication network, such as e.g. the Internet or other corresponding packet-switched telecommunication network utilizing the IP protocol (Internet Protocol, IP), and the aforementioned dictating terminal device is a computer terminal device equipped with a microphone.

The present invention has the advantage over prior art that it enables one to offer users an easy-to-use and intuitive graphic user interface by means of which voice messages are browsed, listened to and responded to.

### BRIEF DESCRIPTION OF THE DRAWINGS

In the following section, the invention will be described by the aid of the accompanying examples of its embodiments with reference to the accompanying drawing, in which
Fig. 1 schematically represents one system in accordance with the invention;
Fig. 2 schematically represents one system in accordance with the invention;
Fig. 3 schematically represents one system in accordance with the invention; and
Fig. 4 schematically represents one system in accordance with the invention.

### DETAILED DESCRIPTION OF THE INVENTION

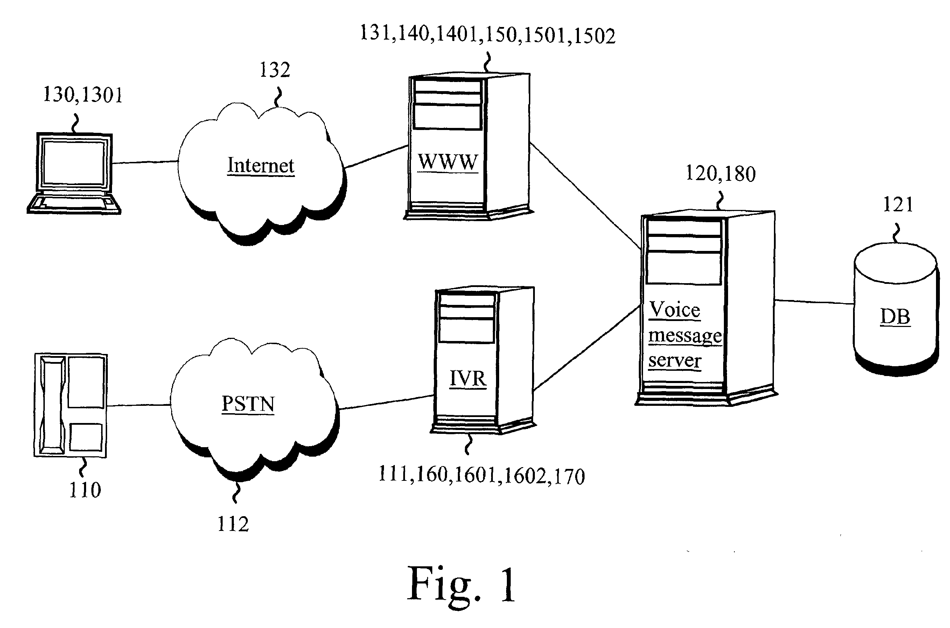

Fig. 1 is a block diagram illustrating, by way of example, the components of one system in accordance with the invention. The system comprises a telephone terminal device 110 of a fixed telephone network for dictating a voice message, an IVR system 111 for guiding the user dictating the voice message as well as for forwarding the dictated voice message further on, and a fixed telephone network 112 (Public Switched Telephone Network, PSTN) for establishing a connection between the telephone terminal device 110 and the IVR system 111.

Further, the voice message system as shown in Fig. 1 comprises a voice message server 120 for adding, modifying or deleting a voice message received from the IVR system 111. The voice message server 120 is connected to the IVR system 111.

The IVR system 111 comprises a message parameter saving unit 160 for automatically saving the predefined message parameters 1601 associated with the received voice message to a voice message-specific message parameter file 1602. The message parameters are parameters associated with the voice message by means of which the voice message in question and its sender are identified by the system, such as e.g. the telephone number of the user that left the voice message, a user identifier in the system or the like, e.g. in order that the aforementioned user that left the voice message could be sent the response of another user, if necessary. The IVR system 111 further comprises a file transferring unit 170 for transferring the voice message with its message parameter files to the voice message server 120 e.g. using the FTP protocol. The IVR system 111 saves the dictated voice message temporarily on its hard disc e.g. in a wave file format generally used in PC computers, after which the voice message file in question is sent with its message parameter files to the voice message server 120 e.g. using the aforementioned FTP protocol.

Further, the voice message system as shown in Fig. 1 comprises a voice message database 121 for saving the voice message received by the voice message server 120. The voice message database 121 is arranged in conjunction with the voice message server 120.

Further, the voice message system as shown in Fig. 1 comprises a WWW server 131 for generating a display user interface 140. The display user interface 140 is used to display the voice messages saved to the voice message database 121 in such a way that to each voice message corresponds a voice message-specific display figure 1401, the visual features of which are adjusted based on predefined voice message-specific display parameters 150. The WWW server 131 in question is connected to the voice message server 120. The display user interface 140 is implemented e.g. by some technique suitable for the purpose and known in itself, such as e.g. as a Java program or using the Macromedia Flash technology.

The display parameters 150 comprise a set of voice message-specific automatic display parameters 1501, the value of each of which is determined automatically by the system. Parameters of this kind include e.g. the time of leaving the message. In case the display figures corresponding to the voice messages are displayed e.g. on a screen whose X axis corresponds to time, the system groups the display figures 1401 based on the time of leaving the message in relation to x axis. It is important to note that the grouping of the display figures 1401 is shown here by way of example only. Alternatively, the display figures 1401 are grouped e.g. randomly with regard to x axis regardless of the time of leaving.

The display parameters 150 further comprise a set of voice message-specific interactive display parameters 1502, the value of each of which is determined by the user, e.g. in conjunction with the dictating of the voice message corresponding to the display figure 1401 in question. These include e.g. the tone of the message. In other words, in conjunction with the dictating of the voice message the user determines, by means of a predetermined tone frequency code installed e.g. on his/her telephone terminal device 110, whether his/her message reflects e.g. neutral or excited emotions. Based on this definition made by the user, the system determines the outward appearance of the display figure 140 corresponding to the message in the display user interface 1401, such as e.g. colour or shape.

Further, the voice message system as shown in Fig. 1 comprises a computer terminal device 130 equipped with a WWW browser 1301 for browsing, listening to and responding to the voice messages saved to the voice message database 121 using the display user interface 140. The WWW browser 1301 is e.g. an Internet Explorer browser or the like.

Further, the voice message system as shown in Fig. 1 comprises a packet-switched telecommunication network 132 for establishing a connection between the WWW server 131 and the computer terminal device 130. In the example as shown in Fig. 1, the packet-switched telecommunication network 132 is the Internet, but also some other packet-switched telecommunication network utilizing the IP protocol (Internet Protocol, IP) is possible.

The voice message server 120, voice message database 121 and the WWW server 131 are implemented either as units physically separate, as shown by Fig. 1, or they are implemented by physically integrating them into one unit (not shown). The user responds to a voice message left by another user e.g. by leaving a voice message of his or her own into the system in response to the aforementioned voice message that was left. Alternatively, the user responds to a voice message left by another user by establishing a connection to the person that left the message via the system. In that case, having listened to the message using his/her computer terminal device 130, the user selects a private call using the display user interface 140 and gives his/her own telephone number to the system. The call request is transmitted to the voice message server 120, which e.g. by means of the IVR system 111 establishes a call between the user that left the message and the user that requested the call. The system gets the telephone number of the user that left the voice message from the message parameters 1601 of the voice message in question. If desired, the call may be arranged as anonymous, in which case the parties of the call do not find out one another's telephone numbers.

Further, the system as shown in Fig. 1 comprises karaoke means 180 for playing the background music of the piece of music selected by the user for the user in order to record the song part performed by the user in response to the background music in question, as well as for combining the background music part and the song part into a voice message. The karaoke means 180 are arranged in conjunction with the voice message server 120. The user establishes a connection from his/her telephone terminal device 110 to the karaoke means 180 by calling a predetermined service number. Guided by the IVR system 111, the user e.g. enters the tone frequency code corresponding to the piece of music desired by him or her via his or her telephone terminal device 110. Instead of tone frequency codes, also e.g. speech recognition may be used. After this, the karaoke means 180 start transmitting the background music part of the selected piece of music to the telephone terminal device 110 of the user in question, whereupon the user hears the background music in question via his or her telephone terminal device 110. In that case, the user starts singing the song part of the piece of music in question into the microphone attached to his or her telephone terminal device. The user either knows the song words from before or follows the lyrics displayed e.g. on a separate WWW user interface (not shown). The song part is transmitted from the telephone terminal device 110 to the karaoke means 180, which record the song part and combine the background music part and the song part into a piece of music which is saved and played as a voice message as shown by the system, e.g. in a MP3 format (MPEG-1 Audio Layer-3, MP3) known in itself.

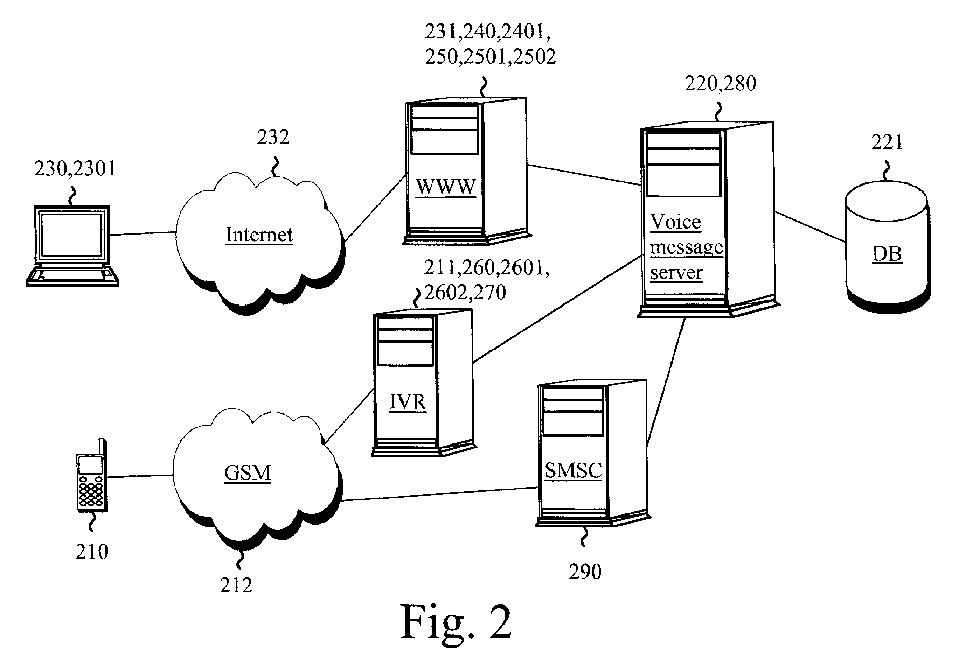

Fig. 2 is a block diagram illustrating, by way of example, the components of one system in accordance with the invention. The system comprises a digital mobile station terminal device 210 for dictating a voice message, an IVR system 211 for guiding the user dictating the voice message as well as for forwarding the dictated voice message further on, and a digital mobile network 212 for establishing a connection between the telephone terminal device 210 and the IVR system 211. The digital mobile network 212 is e.g. a GSM network or the like.

Further, the voice message system as shown in Fig. 2 comprises a voice message server 220 for adding, modifying or deleting a voice message received from the IVR system 211. The voice message server 220 is connected to the IVR system 211.

The IVR system 211 comprises a message parameter saving unit 260 for automatically saving the predefined message parameters 2601 associated with the received voice message to a voice message-specific message parameter file 2602. The message parameters are parameters associated with the voice message by means of which the voice message in question and its sender are identified by the system, such as e.g. the telephone number of the user that left the voice message, a user identifier in the system or the like, e.g. in order that the aforementioned user that left the voice message could be sent the response of another user, if necessary. The IVR system 211 further comprises a file transferring unit 270 for transferring the voice message with its message parameter files to the voice message server 220 e.g. using the FTP protocol. The IVR system 211 saves the dictated voice message temporarily on its hard disc e.g. in a wave file format generally used in PC computers, after which the voice message file in question is sent with its message parameter files to the voice message server 220 e.g. using the aforementioned FTP protocol.

Further, the voice message system as shown in Fig. 2 comprises a voice message database 221 for saving the voice message received by the voice message server 220. The voice message database 221 is arranged in conjunction with the voice message server 220.

Further, the voice message system as shown in Fig. 2 comprises a WWW server 231 for generating a display user interface 240. The display user interface 240 is used to display the voice messages saved to the voice message database 221 in such a way that to each voice message corresponds a voice message-specific display figure 2401, the visual features of which are adjusted based on predefined voice message-specific display parameters 250. The WWW server 231 in question is connected to the voice message server 220. The display user interface 240 is implemented e.g. by some technique suitable for the purpose and known in itself, such as e.g. as a Java program or using the Macromedia Flash technology.

The display parameters 250 comprise a set of voice message-specific automatic display parameters 2501, the value of each of which is determined automatically by the system. Parameters of this kind include e.g. the time of leaving the message. In case the display figures 2401 corresponding to the voice messages are displayed e.g. on a screen whose X axis corresponds to time, the system groups the display figures 2401 based on the time of leaving the message in relation to x axis. It is important to note that the grouping of the display figures 2401 is shown here by way of example only. Alternatively, the display figures 2401 are grouped e.g. randomly with regard to x axis regardless of the time of leaving.

The display parameters 250 further comprise a set of voice message-specific interactive display parameters 2502, the value of each of which is determined by the user, e.g. in conjunction with the dictating of the voice message corresponding to the display figure 2401 in question. These include e.g. the tone of the message. In other words, in conjunction with the dictating of the voice message the user determines, by means of a predetermined tone frequency code installed e.g. on his/her mobile station terminal device 210, whether his/her message reflects e.g. neutral or excited emotions. Based on this definition made by the user, the system determines the outward appearance of the display figure 2401 corresponding to the message in the display user interface 240, such as e.g. colour or shape. Alternatively, the interactive display parameters 2502 are determined in conjunction with the dictating of the voice message by some other known means than tone frequency codes, e.g. by means of short messages.

Further, the voice message system as shown in Fig. 2 comprises a computer terminal device 230 equipped with a WWW browser 2301 for browsing, listening to and responding to the voice messages saved to the voice message database 221 using the display user interface 240. The WWW browser 2301 is e.g. an Internet Explorer browser or the like.

Further, the voice message system as shown in Fig. 2 comprises a packet-switched telecommunication network 232 for establishing a connection between the WWW server 231 and the computer terminal device 230. In the example as shown in Fig. 2, the packet-switched telecommunication network 232 is the Internet, but also some other packet-switched telecommunication network utilizing the IP protocol (Internet Protocol, IP) is possible.

The voice message server 220, voice message database 221 and the WWW server 231 are implemented either as units physically separate, as shown by Fig. 2, or they are implemented by physically integrating them into one unit (not shown). The user responds to a voice message left by another user e.g. by leaving a voice message of his or her own into the system in response to the aforementioned voice message that was left. Alternatively, the user responds to a voice message left by another user by establishing a connection to the person that left the message via the system. In that case, having listened to the message using his/her computer terminal device 230, the user selects a private call using the display user interface 240 and gives his/her own telephone number to the system. The call request is transmitted to the voice message server 220, which e.g. by means of the IVR system 211 establishes a call between the user that left the message and the user that requested the call. The system gets the telephone number of the user that left the voice message from the message parameters 2601 of the voice message in question. If desired, the call may be arranged as anonymous, in which case the parties of the call do not find out one another's telephone numbers.

Further, the system as shown in Fig. 2 comprises karaoke means 280 for playing the background music of the piece of music selected by the user for the user in order to record the song part performed by the user in response to the background music in question, as well as for combining the background music part and the song part into a voice message. The karaoke means 280 are arranged in conjunction with the voice message server 220. The user establishes a connection from his/her mobile station terminal device 210 to the karaoke means 280 by calling a predetermined service number. Guided e.g. by the IVR system 211, the user enters the tone frequency code corresponding to the piece of music desired by him or her via his or her mobile station terminal device 210. Alternatively, instead of a tone frequency code, e.g. a short message or speech recognition is used. After this, the karaoke means 280 start transmitting the background music part of the selected piece of music to the mobile station terminal device 210 of the user in question, whereupon the user hears the background music in question via his or her mobile station terminal device 210. In that case, the user starts singing the song part of the piece of music in question into the microphone attached to his or her mobile station terminal device 210. The user either knows the song words from before or follows the lyrics displayed e.g. on a separate WWW user interface (not shown). The song part is transmitted from the mobile station terminal device 210 to the karaoke means 280, which record the song part and combine the background music part and the song part into a piece of music which is saved and played as a voice message as shown by the system, e.g. in a MP3 format (MPEG-1 Audio Layer-3, MP3) known in itself.

Further, the system as shown in Fig. 2 comprises a short message service centre 290 (Short Message Service Center, SMSC) for transmitting short messages between the mobile station terminal device 210 and the voice message server 220, which short message service centre 290 is connected to the digital mobile network 212 and to the voice message server 220. Short messages being transmitted between the mobile station terminal device 210 and the voice message server 220 include e.g. the aforementioned interactive display parameters being transmitted by short messages. Further, in one embodiment of the invention, short messages are utilized in sending the desired voice message to the subscriber number selected by the user. In that case, the user sends a short message from his or her mobile station terminal device 210 to the voice message server 220 via the short message service centre 290, which short message includes the code corresponding to the voice message saved to the voice message database 221 as well as the telephone number of the recipient. The voice message server 220 transmits the voice message in question to the mobile station terminal device of the recipient (not shown) e.g. by means of the IVR system 211.

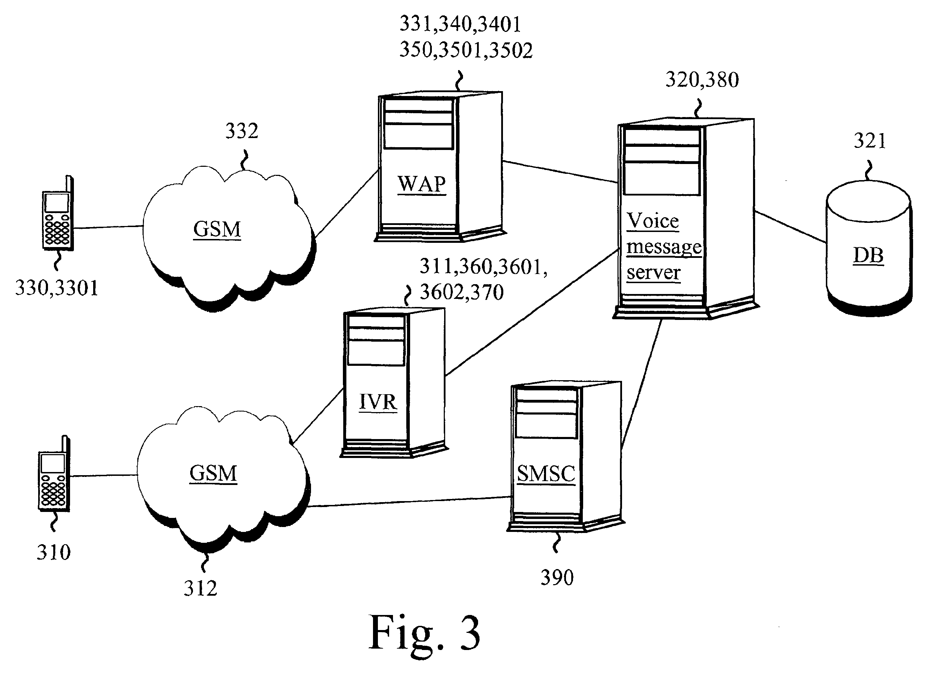

Fig. 3 is a block diagram illustrating, by way of example, the components of one system in accordance with the invention. The system comprises a digital mobile station terminal device 310 for dictating a voice message, an IVR system 311 for guiding the user dictating the voice message as well as for forwarding the dictated voice message further on, and a digital mobile network 312 for establishing a connection between the telephone terminal device 310 and the IVR system 311. The digital mobile network 312 is e.g. a GSM network or the like.

Further, the voice message system as shown in Fig. 3 comprises a voice message server 320 for adding, modifying or deleting a voice message received from the IVR system 311. The voice message server 320 is connected to the IVR system 311.

The IVR system 311 comprises a message parameter saving unit 360 for automatically saving the predefined message parameters 3601 associated with the received voice message to a voice message-specific message parameter file 3602. The message parameters are parameters associated with the voice message by means of which the voice message in question and its sender are identified by the system, such as e.g. the telephone number of the user that left the voice message, a user identifier in the system or the like, e.g. in order that the aforementioned user that left the voice message could be sent the response of another user, if necessary. The IVR system 311 further comprises a file transferring unit 370 for transferring the voice message with its message parameter files to the voice message server 320 e.g. using the FTP protocol. The IVR system 311 saves the dictated voice message temporarily on its hard disc e.g. in a wave file format generally used in PC computers, after which the voice message file in question is sent with its message parameter files to the voice message server 320 e.g. using the aforementioned FTP protocol.

Further, the voice message system as shown in Fig. 3 comprises a voice message database 321 for saving the voice message received by the voice message server 320. The voice message database 321 is arranged in conjunction with the voice message server 320.

Further, the voice message system as shown in Fig. 3 comprises a WAP server 331 for generating a display user interface 340. The display user interface 340 is used to display the voice messages saved to the voice message database 321 in such a way that to each voice message corresponds a voice message-specific display figure 3401, the visual features of which are adjusted based on predefined voice message-specific display parameters 350. The WAP server 331 in question is connected to the voice message server 320. The WAP server 331 is implemented either as a server which is equipped with the WAP functionality as such, or as a combination of a WWW server and a WAP gateway, in which case the WAP gateway performs the necessary protocol conversions.

The display parameters 350 comprise a set of voice message-specific automatic display parameters 3501, the value of each of which is determined automatically by the system. Parameters of this kind include e.g. the time of leaving the message. In case the display figures 3401 corresponding to the voice messages are displayed e.g. on a screen whose X axis corresponds to time, the system groups the display figures 3401 based on the time of leaving the message in relation to x axis. It is important to note that the grouping of the display figures 3401 is shown here by way of example only. Alternatively, the display figures 3401 are grouped e.g. randomly with regard to x axis regardless of the time of leaving.

The display parameters 350 further comprise a set of voice message-specific interactive display parameters 3502, the value of each of which is determined by the user, e.g. in conjunction with the dictating of the voice message corresponding to the display figure 3401 in question. These include e.g. the tone of the message. In other words, in conjunction with the dictating of the voice message the user determines, by means of a predetermined tone frequency code installed e.g. on his/her mobile station terminal device 310, whether his/her message reflects e.g. neutral or excited emotions. Based on this definition made by the user, the system determines the outward appearance of the display figure 3401 corresponding to the message in the display user interface 340, such as e.g. colour or shape. Alternatively, the interactive display parameters 3502 are determined by some other known means than tone frequency codes, e.g. by means of short messages.

Further, the voice message system as shown in Fig. 3 comprises a digital mobile station terminal device 330 equipped with a WAP browser 3301 for browsing, listening to and responding to the voice messages saved to the voice message database 321 utilizing the display user interface 340.

Further, the voice message system as shown in Fig. 3 comprises a digital mobile network 332 for establishing a connection between the WAP server 331 and the mobile station terminal device 330. In the example of Fig. 3, the digital mobile network 332 is e.g. a GSM network or the like.

The voice message server 320, voice message database 321 and the WAP server 331 are implemented either as units physically separate, as shown by Fig. 3, or they are implemented by physically integrating them into one unit (not shown). The user responds to a voice message left by another user e.g. by leaving a voice message of his or her own into the system in response to the aforementioned voice message that was left. Alternatively, the user responds to a voice message left by another user by establishing a connection to the person that left the message via the system. In that case, having listened to the message using his/her mobile station terminal device 330, the user selects a private call using the display user interface 340 and gives his/her own telephone number to the system. The call request is transmitted to the voice message server 320, which e.g. by means of the IVR system 311 establishes a call between the user that left the message and the user that requested the call. The system gets the telephone number of the user that left the voice message from the message parameters 3601 of the voice message in question. If desired, the call may be arranged as anonymous, in which case the parties of the call do not find out one another's telephone numbers.

Further, the system as shown in Fig. 3 comprises karaoke means 380 for playing the background music of the piece of music selected by the user for the user in order to record the song part performed by the user in response to the background music in question, as well as for combining the background music part and the song part into a voice message. The karaoke means 380 in question are arranged in conjunction with the voice message server 320. The user establishes a connection from his/her telephone terminal device 310 to the karaoke means 380 by calling a predetermined service number. Guided e.g. by the IVR system 311, the user enters the tone frequency code corresponding to the piece of music desired by him or her via his or her mobile station terminal device 310. Alternatively, instead of a tone frequency code, e.g. a short message or speech recognition is used. After this, the karaoke means 380 start transmitting the background music part of the selected piece of music to the mobile station terminal device 310 of the user in question, whereupon the user hears the background music in question via his or her mobile station terminal device 310. In that case, the user starts singing the song part of the piece of music in question into the microphone attached to his or her mobile station terminal device 310. The user either knows the song words from before or follows the lyrics displayed e.g. on a separate WWW user interface (not shown). The song part is transmitted from the mobile station terminal device 310 to the karaoke means 380, which record the song part and combine the background music part and the song part into a piece of music which is saved and played as a voice message as shown by the system, e.g. in a MP3 format (MPEG-1 Audio Layer-3, MP3) known in itself.

Further, the system as shown in Fig. 3 comprises a short message service centre 390 (Short Message Service Center, SMSC) for transmitting short messages between the mobile station terminal device 310 and the voice message server 320, which short message service centre 390 is connected to the digital mobile network 312 and to the voice message server 320. Short messages being transmitted between the mobile station terminal device 310 and the voice message server 320 include e.g. the aforementioned interactive display parameters being transmitted by short messages. Further, in one embodiment of the invention, short messages are utilized in sending the desired voice message to the subscriber number selected by the user. In that case, the user sends a short message from his or her mobile station terminal device 310 to the voice message server 320 via the short message service centre 390, which short message includes the code corresponding to the voice message saved to the voice message database 321 as well as the telephone number of the recipient. The voice message server 320 transmits the voice message in question to the mobile station terminal device of the recipient (not shown) e.g. by means of the IVR system 311.

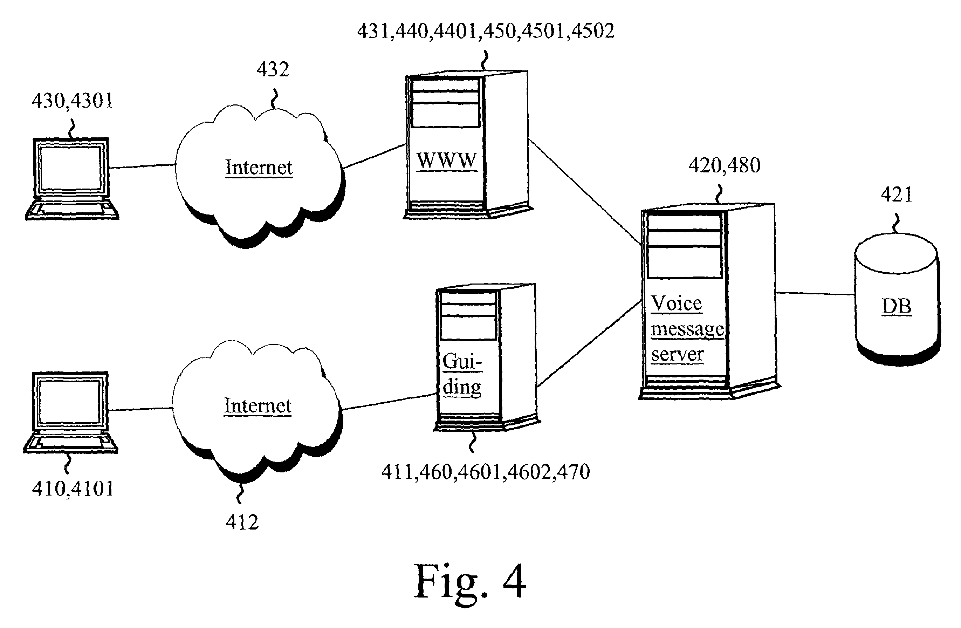

Fig. 4 is a block diagram illustrating, by way of example, the components of one system in accordance with the invention. The system comprises a computer terminal device 410 for dictating a voice message, an IVR system 411 for guiding the user dictating the voice message as well as for forwarding the dictated voice message further on, and a packet-switched telecommunication network 412 for establishing a connection between the computer terminal device 410 and the guide system 411. In addition, the computer terminal device 410 comprises other means known in itself, needed in the dictating of a voice message, such as e.g. a sound card or corresponding. The guide system 411 is implemented utilizing the technique known in itself on a hardware or software basis either as a separate server, as shown by Fig. 4, or it is implemented by integrating it partly or wholly into the other components of the system. In the example of Fig. 4, the packet-switched telecommunication network 412 is the Internet, but also some other corresponding packet-switched telecommunication network utilizing the IP protocol (Internet Protocol, IP) is possible.

Further, the voice message system as shown in Fig. 4 comprises a voice message server 420 for adding, modifying or deleting a voice message received from the guide system 411. The voice message server 420 is connected to the guide system 411.

The guide system 411 comprises a message parameter saving unit 460 for automatically saving the predefined message parameters 4601 associated with the received voice message to a voice message-specific message parameter file 4602. The message parameters are parameters associated with the voice message by means of which the voice message in question and its sender are identified by the system, such as e.g. the IP address of the user that left the voice message, a user identifier in the system or the like, e.g. in order that the aforementioned user that left the voice message could be sent the response of another user, if necessary. The guide system 411 further comprises a file transferring unit 470 for transferring the voice message with its message parameter files to the voice message server 420 e.g. using the FTP protocol. The guide system 411 saves the dictated voice message temporarily on its hard disc e.g. in a wave file format generally used in PC computers, after which the voice message file in question is sent with its message parameter files to the voice message server 420 e.g. using the aforementioned FTP protocol.

Further, the voice message system as shown in Fig. 4 comprises a voice message database 421 for saving the voice message received by the voice message server 420. The voice message database 421 is arranged in conjunction with the voice message server 420.

Further, the voice message system as shown in Fig. 4 comprises a WWW server 431 for generating a display user interface 440. The display user interface 440 is used to display the voice messages saved to the voice message database 421 in such a way that to each voice message corresponds a voice message-specific display figure 4401, the visual features of which are adjusted based on predefined voice message-specific display parameters 450. The WWW server 431 in question is connected to the voice message server 420. The display user interface 440 is implemented e.g. by a technique known in itself, suitable for the purpose, such as e.g. as a Java program or by means of Macromedia Flash technology.

The display parameters 450 comprise a set of voice message-specific automatic display parameters 4501, the value of each of which is determined automatically by the system. Parameters of this kind include e.g. the time of leaving the message. In case the display figures 4401 corresponding to the voice messages are displayed e.g. on a screen whose X axis corresponds to time, the system groups the display figures 4401 based on the time of leaving the message in relation to x axis. It is important to note that the grouping of the display figures 4401 is shown here by way of example only. Alternatively, the display figures 4401 are grouped e.g. randomly with regard to x axis regardless of the time of leaving the message.

The display parameters 450 further comprise a set of voice message-specific interactive display parameters 4502, the value of each of which is determined by the user, e.g. in conjunction with the dictating of the voice message corresponding to the display figure 4401 in question. These include e.g. the tone of the message. In other words, in conjunction with the dictating of the voice message the user determines, by means of a predetermined tone frequency code installed e.g. on his/her telephone terminal device 410, whether his/her message reflects e.g. neutral or excited emotions. Based on this definition made by the user, the system determines the outward appearance of the display figure 4401 corresponding to the message in the display user interface 440, such as e.g. colour or shape.

Further, the voice message system as shown in Fig. 4 comprises a computer terminal device 430 equipped with a WWW browser 4301 for browsing, listening to and responding to the voice messages saved to the voice message database 421 using the display user interface 440. The WWW browser 4301 is e.g. an Internet Explorer browser or the like.

Further, the voice message system as shown in Fig. 4 comprises a packet-switched telecommunication network 432 for establishing a connection between the WWW server 431 and the computer terminal device 430. In the example of Fig. 4, the packet-switched telecommunication network is the Internet, but also other packet-switched telecommunication network utilizing the IP protocol (Internet Protocol, IP) is possible.

The voice message server 420, voice message database 421 and the WWW server 431 are implemented either as units physically separate, as shown by Fig. 4, or they are implemented by physically integrating them into one unit (not shown). The user responds to a voice message left by another user e.g. by leaving a voice message of his or her own into the system in response to the aforementioned voice message that was left.

Further, the system as shown in Fig. 4 comprises karaoke means 480 for playing the background music of the piece of music selected by the user for the user in order to record the song part performed by the user in response to the background music in question, as well as for combining the background music part and the song part into a voice message. The karaoke means 480 in question are arranged in conjunction with the voice message server 420. The user establishes a connection from his/her computer terminal device 410 to the karaoke means 480 and selects the piece of music desired by him or her. After this, the karaoke means 480 start transmitting the background music part of the selected piece of music to the computer terminal device 410 of the user in question, whereupon the user hears the background music in question via his or her computer terminal device 410. In that case, the user starts singing the song part of the piece of music in question into the microphone attached to his or her computer terminal device 410. The user either knows the song words from before or follows the lyrics displayed e.g. on a separate WWW user interface (not shown). The song part is transmitted from the computer terminal device 410 to the karaoke means 480, which record the song part and combine the background music part and the song part into a piece of music which is saved and played as a voice message as shown by the system, e.g. in a MP3 format (MPEG-1 Audio Layer-3, MP3) known in itself.

The invention is not restricted merely to the examples of its embodiments referred to above, instead many variations are possible within the scope of the inventive idea defined by the claims.

## Claims

1. A voice message system by means of which the user both browses and listens to and responds to the voice messages left by other users, which system comprises:
a dictating terminal device (110) for dictating a voice message,
a guide system (111) for guiding the user dictating the voice message as well as for forwarding the dictated voice message further on, and
a first telecommunication network (112) for establishing a connection between the aforementioned dictating terminal device and the guide system,
**characterized in that** the system further comprises:
a voice message server (120) for adding, modifying and deleting a voice message received from the guide system, which voice message server is connected to the aforementioned guide system,
a voice message database (121) for saving the voice message received from the aforementioned voice message server, which voice message database is arranged in conjunction with the voice message server,
a telecommunication server (131) for generating a display user interface (140), which display user interface is used to display the voice messages saved to the voice message database as display figures (1401), the visual features of each of which are adjusted based on predetermined display parameters (150), and which telecommunication server is connected to the aforementioned voice message server,
a browser terminal device (130) for browsing, listening to and responding to the aforementioned voice messages utilizing the aforementioned display user interface, and
a second telecommunication network (132) for establishing a connection between the aforementioned telecommunication server and the browser terminal device.

2. The system according to claim 1, **characterized in that** the aforementioned guide system comprises:
a message parameter saving unit (160) for automatically saving the predefined messages parameters (1601) associated with the voice message to a voice message-specific voice message parameter file (1602).

3. The system according to claim 1 or 2, **characterized in that** the aforementioned guide system further comprises:
a file transferring unit (170) for transferring the received voice message with its message parameter files to the voice message server.

4. The system according to claim 1, 2 or 3, **characterized in that** the aforementioned display parameters comprise:
a set of automatic display parameters (1501), the value of each of which is automatically determined by the system.

5. The system according to claim 1, 2 ,3, 4 or 5, **characterized in that** the aforementioned display parameters further comprise:
a set of interactive display parameters (1502), the value of each of which is determined by the user.

6. The system according to claim 1, 2, 3, 4 or 5, **characterized in that** the system further comprises:
karaoke means (180) for playing the piece of music selected by the user for the user in order to record the song part performed by the user in response to the background music in question, as well as for combining the background music part and the song part into a voice message, which karaoke means are arranged in conjunction with the aforementioned voice message server.

7. The system according to claim 1, 2, 3, 4, 5 or 6, **characterized in that** that:
the aforementioned telecommunication network is a packet-switched telecommunication network,
the aforementioned telecommunication server is a WWW server, and
the aforementioned browser terminal device is a computer terminal device which is equipped with a WWW browser (1301).

8. The system according to claim 1, 2, 3, 4, 5 or 6, **characterized in that**:
the aforementioned second telecommunication network is a digital mobile network,
the aforementioned telecommunication server is a WAP server, and
the aforementioned browser terminal device is a mobile station terminal device equipped with a WAP browser (3301).

9. The system according to claim 1, 2, 3, 4, 5, 6, 7 or 8, **characterized in that**:
the aforementioned first telecommunication network is a fixed telephone network,
the aforementioned dictating terminal device is a telephone terminal device of a fixed telephone network, and
the aforementioned guide system is an IVR system.

10. The system according to claim 1, 2, 3, 4, 5, 6, 7 or 8, **characterized in that**:
the aforementioned telecommunication network is a digital mobile network,
the aforementioned dictating terminal device is a digital mobile station terminal device, and
the aforementioned guide system is an IVR system.

11. The system according to claim 10, **characterized in that** the system further comprises:
a short message service centre (290) for transmitting short messages between the aforementioned dictating terminal device and voice message server, which short message service centre is connected to the aforementioned first telecommunication network and voice message server.

12. The system according to the claim 1, 2, 3, 4, 5, 6, 7 or 8, **characterized in that**:
the aforementioned first telecommunication network is a packet-switched telecommunication network, and
the aforementioned dictating terminal device is a computer terminal device which is equipped with a microphone (4101).
